# FASCICULE DE BREVET EUROPEEN

(11) **EP 0 783 166 B1**
(45) Date de publication et mention de la délivrance du brevet: **18.08.2004**
(21) Numéro de dépôt: 96870163.1
(22) Date de dépôt: 23.12.1996
(51) Int. Cl.: G11B 15/675, G11B 15/17

(54) **Dispositif de vérification et de centrage pour chargement de cassettes**
Prüfungs- und Zentrierungsvorrichtung zum Einlegen von Kassetten
Checking and centering device for cassette loading

(30) Priorité: 04.01.1996 BE 9600005; 20.03.1996 BE 9600252
(43) Date de publication de la demande: 09.07.1997
(73) Titulaire: STAAR SOCIETE ANONYME, B-1200 Bruxelles (BE)
(72) Inventeur: d'Alayer de Costemore d'Arc, Stéphane Marie André, 1474 Ways (BE)
(74) Mandataire: Overath, Philippe

(56) Documents cités:
- EP-A- 0 293 047
- EP-A- 0 374 899
- EP-A- 0 415 411
- US-A- 5 465 246

## Description

La présente invention se rapporte aux dispositifs de chargement de cassettes, cartouches, .... boîtiers, ci-après dénommés cassettes, dans des appareils d'enregistrement et/ou de reproduction du support d'informations qu'elles contiennent et concerne plus particulièrement un dispositif vérifiant la présentation correcte et assurant le centrage de toute cassette introduite par l'utilisateur ou l'alertant en cas de mauvais positionnement. Elle concerne notamment, sans y être limitée, les dispositifs de chargement par tiroir, c'est-à-dire ceux où la cassette est placée dans un logement qui effectue généralement un mouvement horizontal puis vertical pour transférer la cassette entre sa position d'insertion, éjection et sa position opérative à l'intérieur de l'appareil.

Si la forme des cassettes compactes analogiques permet d'éviter un mauvais positionnement parce qu'elles sont dissymétriques, l'un de leurs côtés étant plus épais et leur face avant plus large, ceci n'est pas le cas des cassettes ayant une forme pratiquement parallélépipédique car toutes leurs faces sont sensiblement identiques deux à deux. C'est notamment le cas des cassettes du standard DV (Digital Video).

Or, il est souhaitable et même nécessaire, pour éviter tout risque de panne, d'endommagement ou de mauvais fonctionnement de l'appareil d'enregistrement et/ou de reproduction, que la cassette soit correctement placée, centrée ou l'utilisateur immédiatement averti s'il la positionne mal et de préférence, au moment même où il la positionne.

Les documents Européens 0 624 873 et 0 374 899 couvrent des détrompeurs s'appliquant à des dispositifs d'insertion par fente.

Le document EP-A-0 293 047 concerne un chargement par tiroir muni de senseurs latéraux ne faisant office que de détecteurs de positionnement sans assurer de centrage. En outre, ils ne peuvent s'appliquer qu'à une seule taille de cassette et en mettant en oeuvre des pièces excessivement fines, ils peuvent être facilement trompés, donc rendus inopérants. Ils requièrent également des éléments très rigides, précis et nécessitant tant à la fabrication qu'au montage de très faibles tolérances ce qui en augmente le coût.

Charger des cassettes de différentes taittes est connu par EP-A-0.374.899 qui est utilisé pour délimiter le préambule de la revendication indépendante, mais les cassettes ne sont pas centrer par un seul dispositif.

Or, avec la miniaturisation des cassettes et des appareils, tous les composants ou éléments mécaniques sont devenus compacts et fins si bien qu'ils risquent d'être facilement endommagés lorsque la cassette et/ou le dispositif de chargement sont forcés ou bloqués à cause d'un mauvais positionnement et/ou centrage de la cassette. De plus, des standards tels le DV prévoient plusieurs tailles de cassettes.

Le but de la présente invention est donc de remédier aux inconvénients précités en proposant des moyens fiables, bon marché et efficaces qui vérifient le positionnement de la cassette placée par l'utilisateur dans le dispositif de chargement, en assurent le centrage ou avertissent immédiatement l'utilisateur en cas d'erreur.

Un autre but de l'invention est de proposer des moyens qui assurent ces opérations de détection, centrage pour des cassettes de tailles différentes.

Un autre but de l'invention est de proposer des moyens simples qui ne grèvent nullement le prix d'un appareil auquel ils sont incorporés.

Un autre but de l'invention est de proposer des moyens faciles à mettre en oeuvre et n'interférant avec aucun des composants de l'appareil auquel ils sont incorporés.

Un autre but de l'invention est de proposer des moyens facilement adaptables à tout type de chargement par tiroir existant sans modifier leur hauteur.

En vue de la réalisation de ces buts, le dispositif objet de l'invention est essentiellement caractérisé par le contenu de la revendication principale.

D'autres avantages et/ou particularités de l'invention ressortiront de la description donnée ci-après à titre d'exemple non limitatif de deux modes de réalisation préférés, auxquels diverses modifications peuvent être apportées sans pour autant sortir du cadre de l'invention et pour lesquels :
- la figure 1 est une vue de dessus d'un mécanisme de chargement sans cassette, muni d'une première variante du dispositif de l'invention, représenté en position d'insertion, éjection,
- la figure 1A est une coupe latérale selon le plan de coupe A-A du dispositif de la figure 1,
- la figure 1B est un détail, à plus grande échelle, d'un élément de la figure 1A, une cassette étant présente,
- la figure 2 est une vue semblable à la figure 1 mais partielle, le mécanisme de chargement ayant été déplacé,
- la figure 2A est semblable à la figure 1A mais partielle et montre le mécanisme de la figure 2,
- la figure 3 est semblable à la figure 2A, le dispositif étant en position inopérative,
- la figure 4 représente le mécanisme de la figure 2 en fin de course,
- la figure 5 est semblable à la figure 1B, à une échelle réduite avec une cassette mal positionnée,
- la figure 6 est une perspective, vue de dessous, d'une cassette Mini DV,
- la figure 7 est semblable à la figure 1 et représente un second mode de réalisation,
- la figure 7A est semblable à la figure 1A pour le dispositif de la figure 7,
- la figure 7B est un détail de la figure 7A,
- la figure 8 est semblable à la figure 7A, mais partielle, le mécanisme de chargement ayant été déplacé,
- la figure 9 est semblable à la figure 8, le dispositif ayant été actionné,
- la figure 10 est semblable à la figure 7, mais partielle, le mécanisme de chargement étant en fin de course,
- la figure 11 représente en perspective le dispositif de l'invention montré aux figures 7 à 10.

Dans un but de clarté et de simplification, seuls les éléments nécessaires à la compréhension de l'invention ont été représentés sur chaque figure et ceux communs aux deux modes de réalisation portent la même référence.

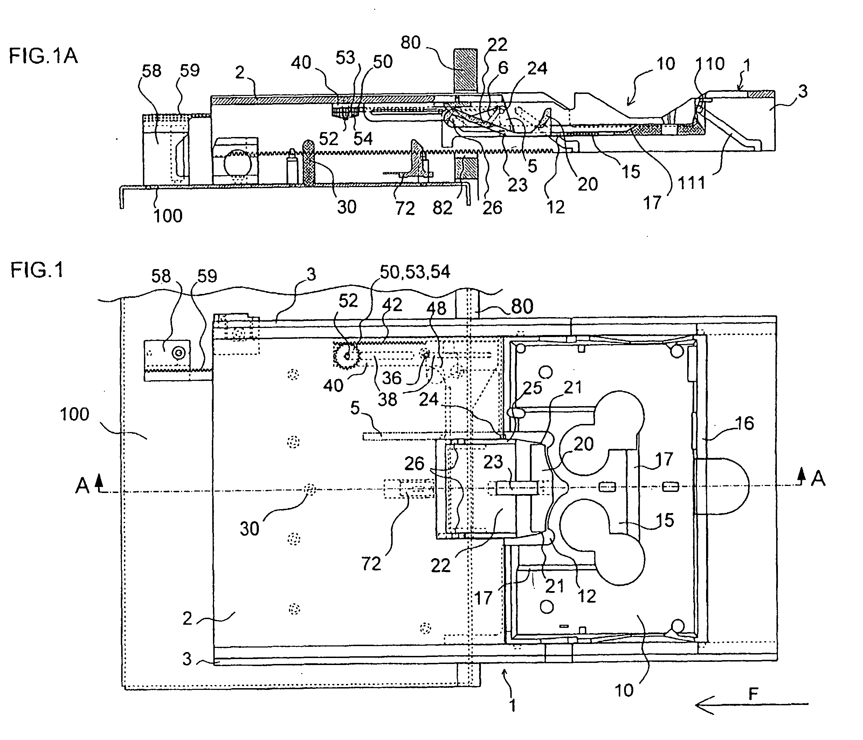

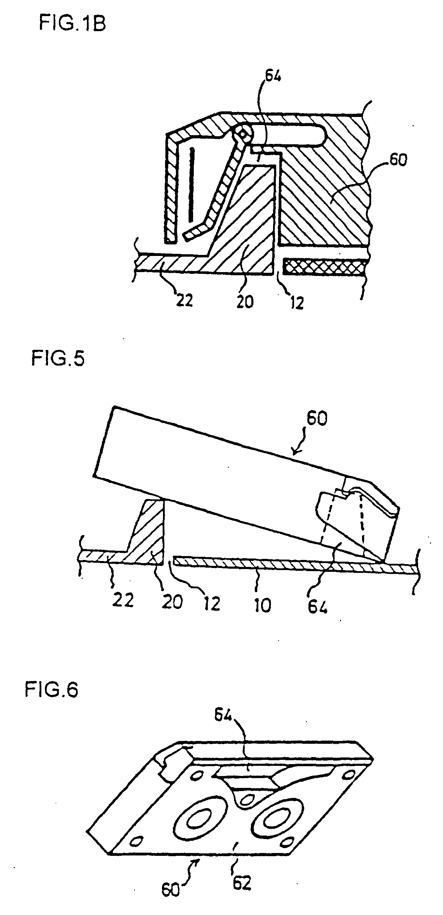

Le dispositif de chargement montré aux figures 1 et 1A comprend essentiellement un tiroir 1 comportant deux parois latérales externes 3 servant de guidage et réunies par une plaque horizontale 2. Ce tiroir comprend un logement 10 ayant la taille de la plus grande cassette du standard pour lequel il est prévu et, dans le cas présent, il correspond à la cassette DV "standard" d'une capacité de quatre heures. Le fond du logement 10 comprend une très légère empreinte 15 limitée par la paroi inclinée 17 pour indiquer visuellement à l'utilisateur l'emplacement de la plus petite cassette DV, à savoir la Mini montrée à la figure 6. Ce format prévoit une troisième cassette dite "professionnelle", d'une taille intermédiaire entre la standard et la mini. Comme le montre la figure 6, toute cassette DV 60, pratiquement parallélépipédique, possède sur sa face inférieure 62 une dépression 64 dans laquelle pénètrent, lorsque la cassette est en position opérative, les doigts assurant le chargement du support d'informations autour du tambour portant les têtes de lecture et/ou d'enregistrement, un secteur dudit tambour, les axes, galets d'entraînement et tout élément coopérant avec le support d'informations qui dans ce cas est une bande magnétique. Cette dépression 64 possède les mêmes dimensions, le même profil et est positionnée au même endroit quelle que soit la taille de la cassette.

Pour de plus amples explications relatives au tiroir 1, au logement 10 et notamment à leur fonctionnement, on se reportera avantageusement à la demande de brevet européen 96 870129.2 de la demanderesse.

Dans le fond du logement 10 est pratiquée une ouverture 12 (figures 1A, 4, 11) d'une taille légèrement plus grande que celle de la dépression 64 pour permettre le passage de tous les éléments devant coopérer avec la cassette 60 et sa bande magnétique.

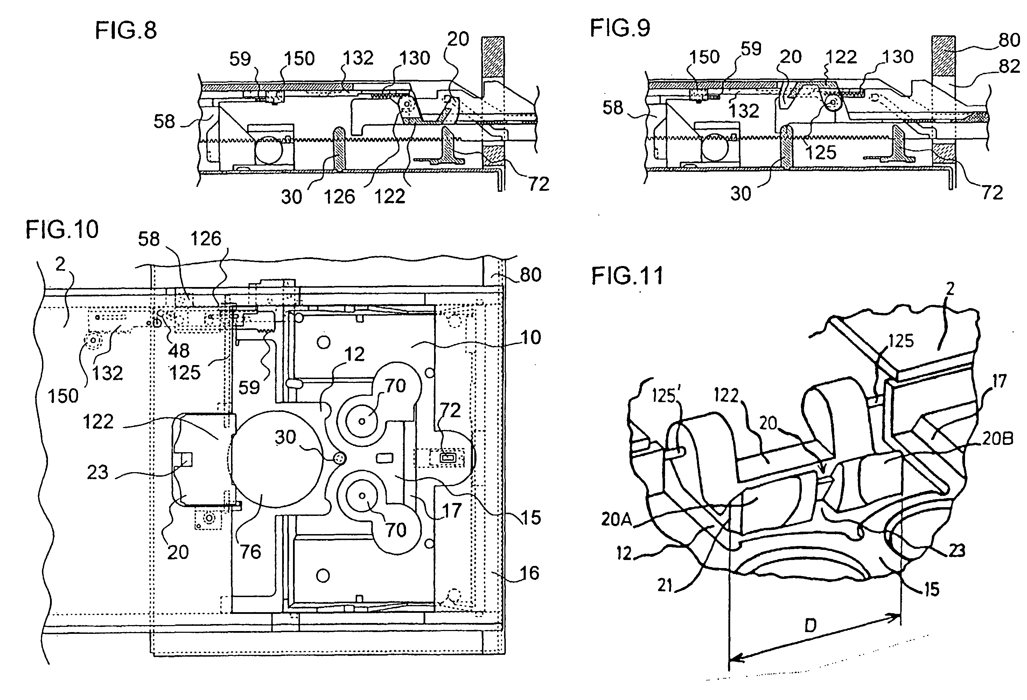

Conformément à l'invention et comme montré aux figures 1, 1A, 1B et 11, une patte 20 est positionnée dans l'ouverture 12 lorsque le tiroir 1 est en position de sortie; cette patte s'étend en substance verticalement et possède la forme de l'empreinte de la dépression 64 pour coopérer avec celle-ci afin de vérifier la présentation correcte de toute cassette 60 placée par l'utilisateur et lui assurer un centrage et un positionnement précis.

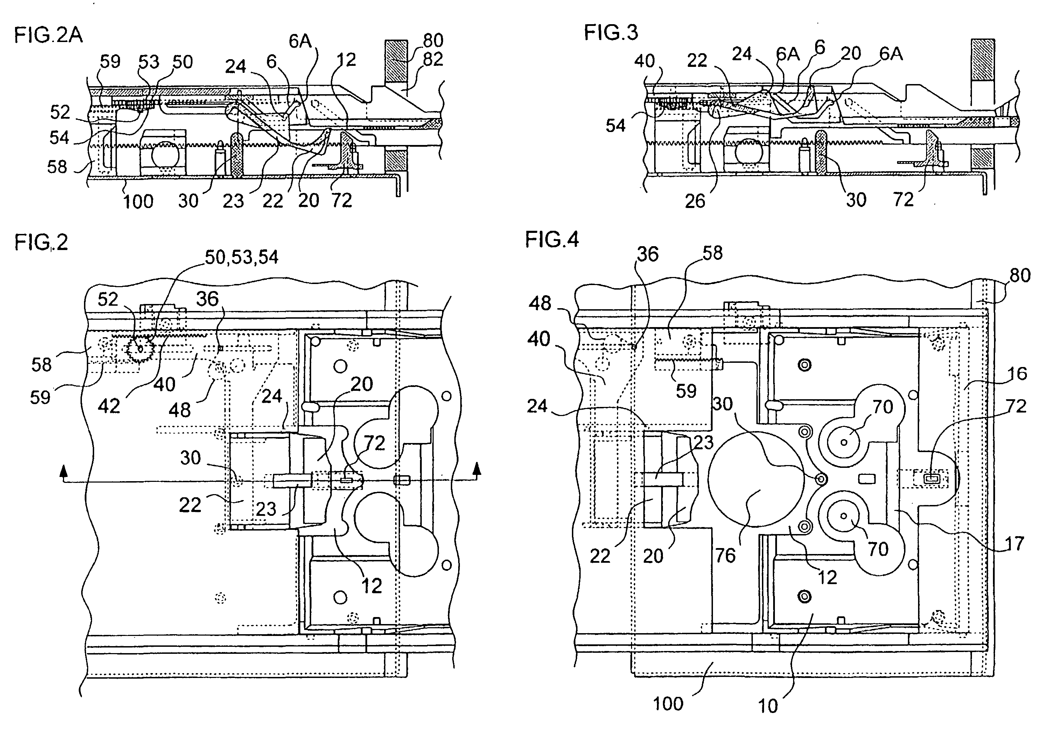

Cette patte 20 montée sur un support mobile 22 relié à une glissière 40 par un axe 26 peut être déplacée verticalement par le téton 24 de son rebord latéral 25 (figure 1) qui est emprisonné dans la gorge 6 pratiquée dans la paroi interne 5 du tiroir 1 à proximité dudit support 22 (figure 1A). La glissière 40 est montée en coulissement sur la plaque 2 grâce à une combinaison classique d'axes 36, 52 portés par la plaque 2 et de fentes 38 prévues dans la glissière 40. L'axe 52 supporte, en libre rotation, deux roues dentées identiques 50, 54 reliées par une friction 53; la roue 50 est en prise avec la denture 42 de la glissière 40 tandis que la roue 54 coopère temporairement avec la denture 59 dont est partiellement muni un support 58 fixé sur le châssis 100 de l'appareil. Enfin, un ressort en épingle 48 a l'une de ses extrémités fixée sur l'axe 36, l'autre sur la glissière 40 pour la pousser et la maintenir de façon élastique dans chacune de ses positions extrêmes de mouvement (figures 1 et 4).

La forme, les profils latéraux 21 et horizontaux de la patte 20 et de son support 22 (figure 11) permettent leur déplacement à l'intérieur de l'appareil sans interférer avec l'un quelconque de ses éléments tels les moyens d'entraînement 70 des bobines de la cassette, les moyens de déverrouillage 72 des bobines, les dispositifs d'arrêt, le tambour 76 des têtes de lecture et/ou d'enregistrement, ....

Lorsque l'utilisateur présente correctement une cassette 60, quelle que soit sa taille (mini, professionnelle ou standard), la forme et les profils de la patte 20 en pénétrant dans la dépression 64 assurent à la cassette 60 un centrage et un positionnement horizontal précis dans le logement 10 (figure 1B) ce qui autorise un déverrouillage aisé du volet protégeant la bande magnétique.

Lorsque le tiroir débute son mouvement de rentrée (figure 1, flèche F), le logement 10 et donc la glissière 40 et la patte 20 reculent simultanément, jusqu'à ce que la roue dentée 54 s'engage dans la denture 59 du support 58. Dès lors, la rotation dans le sens horlogique (figures 2, 3) impartie à la roue 54 est transmise à la roue 50 par la friction 53 et la glissière 40, grâce à la denture 42, est translatée dans le même sens que le tiroir 1. Le support 22 s'éloigne donc du logement 10 et la patte 20, grâce au téton 24 qui parcourt le profil de la gorge 6, effectue un mouvement ondulatoire. Dans un premier temps, la gorge 6 fait descendre le téton 24; le support 22 est donc pivoté vers le châssis 100, ce qui dégage la patte 20 de la dépression 64 de la cassette et de l'ouverture 12 du logement 10. La patte 20 occupe la position basse extrême représentée à la figure 2A en utilisant l'espace libre entre les moyens d'entraînement 70 du support d'informations, de déverrouillage 72 tandis qu'une ouverture 23 pratiquée dans le support 22 permet le passage du dispositif optique 30 surveillant le défilement de la bande. Comme le support 22 et la patte 20 subissent le mouvement du tiroir 1 et la translation impartie par la glissière 40, tous deux parcourent une distance sensiblement double de celle du tiroir 1. En poursuivant le profil de la gorge 6, le téton 24 remonte et amène le support 22 et la patte 20 à leur niveau supérieur (figure 3).

Puis la roue dentée 54 quitte la denture 59 du support 58 et la glissière 40 ne subit alors que l'influence du ressort 48. Pendant la translation de la glissière 40, l'extrémité du ressort 48 qui y est fixée dépasse celle fixée à l'axe 36, donc le ressort bascule et maintient élastiquement la glissière 40 vers le fond du tiroir 1 tandis que ce dernier achève son mouvement de rentrée. La patte 20 et le support 22 sont ainsi maintenus dégagés de tout élément du mécanisme de lecture et/ou d'enregistrement, par exemple le tambour 76 supportant les têtes de lecture et/ou d'enregistrement, les moyens d'entraînement 70 du support d'informations (figure 4). Simultanément, la cassette est descendue sur ses moyens d'entraînement par coulissement des tétons portés par le logement 10 dans des gorges 111 pratiquées dans la face interne des parois latérales 3 du tiroir 1 (figure 1), comme expliqué dans la demande de brevet européen 96 870129.2. Tous les éléments précités sont alors dans la position montrée à la figure 4.

Lorsque le tiroir effectue un mouvement en sens inverse pour éjecter ou permettre le chargement d'une cassette, les phases décrites ci-dessus se déroulent dans le sens inverse.

La cassette (non représentée) et son logement 10 sont tout d'abord ramenés à leur niveau horizontal supérieur, puis la roue 54 vient en prise avec la denture 59 du support 58, ce qui actionne la roue 50 et donc la glissière 40 vers l'avant du tiroir 1. Comme la glissière 40 subit un déplacement sensiblement double de celui du tiroir 1, la patte 20 est ramenée vers le logement 10 et donc la cassette 60 qui s'y trouvait éventuellement. Le téton parcourant le profil de la gorge 6 dans le sens inverse, le support 22 et la patte 20 redescendent, passent par la position représentée aux figures 2 et 2A puis le support 22 remonte et la patte 20 vient progressivement s'engager dans l'ouverture 12 et éventuellement la dépression 64 de la cassette 60 qui sont libres de tout élément d'entraînement. La roue dentée 54 quitte alors la denture 59 et le dispositif occupe la position représentée aux figures 1, 1A. En effectuant son mouvement de translation, la glissière 40 a fait repasser l'extrémité du ressort 48 qui y est fixée de l'autre côté de l'axe 36 ce qui maintient élastiquement la glissière 40, le support 22 et la patte 20 dans la position des figures 1 et 1A. Le logement 10 est alors à l'extérieur de l'appareil et l'utilisateur peut retirer la cassette, en positionner une autre ou rentrer le tiroir.

Comme montré aux figures 2A et 3, il est avantageux que chaque extrémité 6A du profil de la gorge 6 soit horizontale de façon à verrouiller la patte 20 en positions opérative (figure 1) et inopérative (figures 3, 4) contre l'action de tout élément extérieur pouvant la pousser vers le bas (par exemple l'utilisateur ou une cassette mal présentée). En effet, dans ce dernier cas (figure 5), la dépression 64 de la cassette 60 n'est jamais au-dessus de la patte 20 et donc toute surface du boîtier de la cassette vient s'appuyer sur cette patte. Puisque celle-ci est verrouillée par le profil 6A et le ressort 48, il n'y a aucun déplacement et l'utilisateur constate immédiatement que la cassette 60 est mal positionnée avant même que le tiroir ne soit déplacé et peut donc instantanément y remédier, préservant ainsi le bon fonctionnement de l'appareil. Si par hasard, l'utilisateur ne s'apercevait pas immédiatement de cet état, puisque la cassette est sensiblement plus haute que l'ouverture 82 pratiquée dans la face avant 80 de l'appareil (figures 1, 1A et 2A) pour le passage du tiroir 1, elle viendrait s'y appuyer, interdisant la rentrée complète du tiroir et instantanément l'utilisateur constaterait cette anomalie.

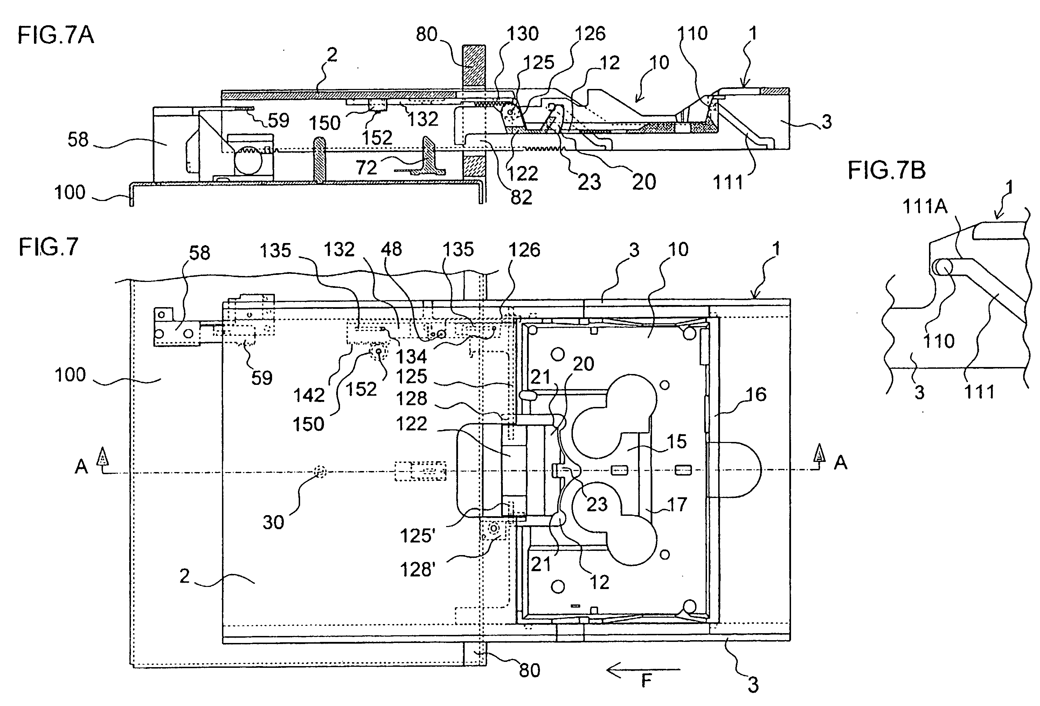

Selon une variante montrée aux figures 7 à 11, la patte 20 et son support 122 effectuent un mouvement de pivotement, en substance de 180°. La patte 20 comprend deux parties symétriques 20A, 20B (figure 11) et l'ouverture 23 est pratiquée dans la patte même.

La patte 20 est montée sur un support 122 emmanché sur un axe 125, guidé et maintenu libre en rotation par la paroi latérale 3 du tiroir et un palier 128 fixé sur la paroi 2 (figures 7, 7A). L'autre côté du support 122 est guidé et maintenu par un axe 125' supporté par un palier 128' également fixé sur la plaque 2. L'axe 125 porte à proximité de la paroi 3 un engrenage 126 monté à serrage et coopérant avec la denture 130 d'une coulisse 132 montée en translation sur la plaque 2 grâce à des tétons 134 fixés sur la plaque 2 et des fentes 135 pratiquées dans la coulisse. Le ressort en épingle 48 dont une extrémité est fixée dans la plaque 2, l'autre dans la coulisse 132 lui assure également deux positions stables en fin de course. L'autre extrémité de la coulisse 132 porte une denture 142 latérale en prise avec la roue dentée 150 montée autour de l'axe 152 fixé sur la plaque 2.

En position d'éjection et/ou d'insertion de la cassette, le dispositif se trouve dans la position représentée aux figures 7, 7A et 11, notamment le ressort 48 maintient la coulisse 132 dans sa position extrême à gauche et la patte 20 en position opérative.

Lorsque le tiroir 1 débute son mouvement de translation, la patte 20 est maintenue dans sa position opérative (figure 8) au-dessus des moyens d'entraînement, de déverrouillage 72 des bobines de la cassette jusqu'à ce que la roue dentée 150 rencontre la denture 59 du support 58.

Puis, la translation du tiroir assure la rotation de la roue dentée 150 par action de la denture 59 et donc la translation de la coulisse 132 vers la droite, en sens opposé à celui du tiroir. Par action de la denture 130 sur l'engrenage 126, l'axe 125, le support 122 et donc la patte 20 subissent une rotation dans le sens horlogique (figure 9) d'environ 180°; ainsi, la patte 20 se dégage du logement 10 et de la cassette qui s'y trouvait pour être amenée dans une position où elle n'interfère avec aucun élément de l'appareil; notamment les moyens d'entraînement 70, le tambour 76 des têtes de lecture et/ou d'enregistrement, l'ouverture 23 de la patte 20 permettant le passage des dispositifs de verrouillage 72 et optiques 30. Comme dans la première variante, le ressort 48 a basculé (figure 10) et maintient la coulisse 132 de façon élastique dans sa position extrême à droite.

En poursuivant sa translation, le tiroir 1 arrive à la position représentée à la figure 10 où le logement 10 et la cassette qu'il contient sont amenés en position opérative. Cette figure met en évidence le gain de place procuré par une patte 20 pivotante ainsi que la compacité de son mécanisme d'actionnement.

Il a été constaté, lors de nombreux essais, que le meilleur résultat est obtenu avec la forme de la patte 20 de la figure 11 : les profils latéraux et supérieurs des deux éléments 20A, 20B sont arrondis pour éviter toute interférence avec les parois de la dépression 64 de la cassette (figure 6), la distance D entre les extrémités des profils latéraux 21 correspond à la largeur de la dépression 64 et l'épaisseur de la patte 20 à sa base correspond à l'ouverture de la dépression 64 pour assurer un centrage très précis de la cassette tandis que la patte 20, à sa partie supérieure est plus étroite que la dépression et son profil arrondi pour faciliter son dégagement.

Le déplacement initial de la patte 20 le long du profil horizontal 6A de la gorge 6 (figures 1 à 4) assure un centrage très précis d'une cassette même placée de façon approximative par l'utilisateur, par conséquent, les parois 16, 17 peuvent être moins inclinées de façon à permettre une préhension plus aisée des cassettes. Pour bénéficier de cet effet dans la seconde variante, il est recommandé de munir les gorges 111 (figure 7B) d'un profil horizontal 111A; ainsi dans un premier temps, le logement 10 effectue par l'intermédiaire de ses tétons 110 qui parcourent ce profil 111A, un léger déplacement par rapport au tiroir 1, ce qui centre la cassette.

D'autre part, le mouvement de la glissière 40 ou coulisse 132 et donc de la patte 20 est réversible à tout moment, il n'est donc pas requis qu'un cycle complet de chargement, déchargement s'effectue avant d'inverser le sens de translation du tiroir 1.

Les moyens mis en oeuvre sont très simples et donc fiables; de plus, ils peuvent être adaptés à tout appareil muni d'un tiroir puisqu'ils échappent, de par leur mouvement, à tout élément de l'appareil assurant le chargement, l'entraînement, l'enregistrement et/ou la lecture du support d'informations.

Enfin, la patte 20 en coopérant avec la dépression 64 commune à une famille de cassettes évite de recourir à une empreinte pour chaque taille de cassette, donc de conserver à ce fond un profil très plat ce qui évite toute augmentation de hauteur. Si néanmoins le fabricant souhaite une légère empreinte pour chaque taille de cassette, la patte 20 est alors positionnée pour la plus petite cassette et la légère imprécision pour la grande cassette due à la différence de niveau est compensée par la périphérie du logement 10 qui limite le positionnement incorrect de la grande cassette.

Dans un mode de réalisation préféré, les deux variantes du dispositif objet de la présente invention sont avantageusement combinées à celui de la demande de brevet européen 96 870129.2 de la demanderesse pour assurer un positionnement et un centrage parfaits des cassettes 60 au début du mouvement du tiroir, puis l'adaptation des moyens d'entraînement à la taille de la cassette avant sa mise en position opérative.
- 1: tiroir
- 2: plaque
- 3: paroi latérale externe
- 5: paroi interne
- 6: gorge
- 6A: partie de 6
- 10: logement
- 12: ouverture
- 15: empreinte
- 16: paroi arrière
- 17: paroi arrière
- 20: patte
- 20A: partie symétrique
- 20B: partie symétrique
- 21: profil latéral
- 22: support
- 23: ouverture
- 24: téton
- 25: rebord latéral
- 26: axe
- 30: détecteur optique
- 36: axe
- 38: fente
- 40: glissière
- 42: denture
- 48: ressort
- 50: roue dentée
- 52: axe
- 53: friction
- 54: roue dentée
- 58: support
- 59: denture
- 60: cassette
- 62: face inférieure
- 64: dépression
- 70: moyens d'entraînement
- 72: moyen de déverrouillage
- 76: tambour des têtes de lecture / enregistrement
- 80: face avant de l'appareil
- 82: ouverture
- 100: châssis
- 110: tétons
- 111: gorge
- 111A: profil horizontal de 111
- 122: support
- 125: axe
- 125': axe
- 126: engrenage
- 128: palier
- 128': palier
- 130: denture
- 132: coulisse
- 134: tétons
- 135: fentes
- 142: denture
- 150: roue dentée
- 152: axe

## Revendications

1. Dispositif de vérification pour cassette (60), cartouche, boîtier, associé à un dispositif de chargement (1) de ladite cassette (60) dans un appareil de lecture et/ou d'enregistrement muni d'un châssis (100) et comportant un logement (10) recevant cassette (60) pour la transférer entre une position d'introduction et une position de lecture et/ou d'enregistrement, ainsi qu'une patte coopérant avec une dépression (64) pratiquée dans la surface inférieure du boîtier des cassettes (60) d'un même standard et de tailles différentes,
**caractérisé en ce que** cette patte (20) possède une forme correspondant à l'empreinte de la dépression (64) et est mobile par rapport à la cassette entre une position de la patte opérative lorsque le logement (10) est en position d'introduction de la cassette pour vérifier la présentation correcte et assurer le centrage de toute cassette (60) qui y est placée, et une position de la patte inopérative où elle est dégagée de la cassette (60), du logement (10) et de tout élément (30, 72, 76) coopérant avec la cassette (60) dans sa position de lecture et/ou d'enregistrement.

2. Dispositif selon la revendication 1, **caractérisé en ce que** la patte (20) comprend des profils latéraux (21) dont l'écartement correspond à la largeur de la dépression (64).

3. Dispositif selon l'une quelconque des revendications précédentes, **caractérisé en ce que** l'épaisseur de la patte (20) à sa base correspond à l'empreinte de la dépression (64).

4. Dispositif selon l'une quelconque des revendications précédentes, **caractérisé en ce que** les profils supérieurs de la patte (20) sont arrondis pour faciliter son dégagement de la dépression (64).

5. Dispositif selon l'une quelconque des revendications précédentes, **caractérisé en ce que** le déplacement de la patte (20) entre ses positions opérative et inopérative est commandé par le mouvement du dispositif de chargement (1).

6. Dispositif selon la revendication 5, **caractérisé en ce que** ce déplacement de la patte (20) est assuré par des moyens (40, 132) portés par le dispositif de chargement (1) et mobiles par rapport à ce dernier.

7. Dispositif selon la revendication 6, **caractérisé en ce que** le déplacement des moyens (40, 132) par rapport au dispositif de chargement (1) est commandé par un élément fixe (58) monté sur le châssis (100) de l'appareil.

8. Dispositif selon l'une des revendications 6 ou 7, **caractérisé en ce que** les moyens (40) sont constitués d'une glissière coopérant avec une roue (50, 54) montée sur le dispositif de chargement (1)

9. Dispositif selon la revendication 8, **caractérisé en ce que** la coopération entre la glissière (40), la roue (50, 54) et l'élément fixe (58) assure un déplacement de la patte (20) dans le sens de celui du dispositif de chargement (1) avec une amplitude supérieure.

10. Dispositif selon la revendication 9, **caractérisé en ce que** le dégagement de la patte (20) de la cassette (60) est guidé par un téton (24) parcourant une gorge (6) prévue dans un élément (5) du dispositif de chargement (1).

11. Dispositif selon la revendication 10, **caractérisé en ce que** la gorge (6) possède à l'une de ses extrémités un profil horizontal (6A) permettant un déplacement de la patte (20) par rapport au logement (10) pour centrer toute cassette (60) placée dans le logement (10).

12. Dispositif selon la revendication 10, **caractérisé en ce que** la gorge (6) possède à chacune de ses extrémités un profil horizontal (6A) pour verrouiller la patte (20) en position opérative, inopérative.

13. Dispositif selon l'une des revendications 6 ou 7, **caractérisé en ce que** la patte (20) est reliée à un axe (125) porté par le dispositif de chargement (1) et actionné en rotation par lesdits moyens (132).

14. Dispositif selon la revendication 13, **caractérisé en ce que** cette seule rotation de la patte (20), en substance de 180°, la place dans une position de non-interférence avec tout élément de l'appareil d'enregistrement et/ou de reproduction pouvant agir sur la cassette (60).

15. Dispositif selon l'une quelconque des revendications précédentes, **caractérisé en ce que** la patte (20) est soumise à l'action des moyens élastiques (48) la maintenant dans ses positions opérative, respectivement inopérative.

16. Dispositif selon l'une quelconque des revendications précédentes, **caractérisé en ce que** la gorge (111) guidant le mouvement du logement (10) par rapport au dispositif de chargement (1) est munie d'un profil horizontal (111A) permettant au logement (10) d'effectuer un déplacement relatif par rapport à la patte (20) dès l'actionnement du dispositif de chargement (1) pour centrer toute cassette placée par l'utilisateur.

17. Dispositif selon l'une quelconque des revendications précédentes, **caractérisé en ce que** pour des cassettes (60) d'un même standard, la position de la patte (20), par rapport au fond du logement (10), correspond à la dépression (64) de la plus petite cassette.

## Patentansprüche

1. Überprüfungsvorrichtung für Kassette (60), Kartusche, Gehäuse, in Verbindung mit einer Ladungsvorrichtung (1) für die Kassette (60) in einem Gerät zum Lesen und/oder zur Aufnahme, versehen mit einem Rahmen (100) und umfassend ein Fach (10) zum Empfang der Kassette (60), um diese zwischen einer Einführstellung und einer Lese- und/oder Aufnahmestellung zu verlagern, sowie eine Klammer, welche mit einer an der unteren Fläche des Gehäuses der Kassetten (60) eines gleichen Standards und verschiedener Größen angebrachten Vertiefung (64) zusammenarbeitet,
**dadurch gekennzeichnet, dass** diese Klammer (20) eine Form aufweist, welche dem Eindruck der Vertiefung (64) entspricht, und bezüglich der Kassette zwischen einer Betriebsstellung der Klammer zum Überprüfen der korrekten Darbietung und zum Sicherstellen der Zentrierung jeder dort platzierten Kassette (60), wenn sich das Fach (10) in Einführstellung der Kassette befindet, und einer Ruhestellung der Klammer, in welcher diese von der Kassette (60), dem Fach (10) und jedem mit der Kassette (60) in ihrer Lese- und/oder Aufnahmestellung zusammenarbeitenden Element (30, 72, 76) gelöst ist, beweglich ist.

2. Vorrichtung nach Anspruch 1, **dadurch gekennzeichnet, dass** die Klammer (20) Seitenprofile (21) umfasst, deren Abstand der Breite der Vertiefung (64) entspricht.

3. Vorrichtung nach einem der vorangehenden Ansprüche, **dadurch gekennzeichnet, dass** die Dicke der Klammer (20) an ihrer Basis dem Eindruck der Vertiefung (64) entspricht.

4. Vorrichtung nach einem der vorangehenden Ansprüche, **dadurch gekennzeichnet, dass** die oberen Profile der Klammer (20) abgerundet sind, um die Befreiung aus der Vertiefung (64) zu erleichtern.

5. Vorrichtung nach einem der vorangehenden Ansprüche, **dadurch gekennzeichnet, dass** die Verlagerung der Klammer (20) zwischen ihrer Betriebsstellung und ihrer Ruhestellung durch die Bewegung der Ladungsvorrichtung (1) gesteuert wird.

6. Vorrichtung nach Anspruch 5, **dadurch gekennzeichnet, dass** die Verlagerung der Klammer (20) durch Mittel (40, 132) gewährleistet ist, welche von der Ladungsvorrichtung (1) gehalten sind und bezüglich letzterer beweglich sind.

7. Vorrichtung nach Anspruch 6, **dadurch gekennzeichnet, dass** die Verlagerung der Mittel (40, 132) bezüglich der Ladungsvorrichtung (1) durch ein festes, an dem Rahmen (100) des Gerätes angebrachtes Element (58) gesteuert wird.

8. Vorrichtung nach einem der Ansprüche 6 oder 7, **dadurch gekennzeichnet, dass** die Mittel (40) eine Gleitschiene umfassen, welche mit einem an der Ladungsvorrichtung (1) angebrachten Rad (50, 54) zusammenarbeitet.

9. Vorrichtung nach Anspruch 8, **dadurch gekennzeichnet, dass** die Zusammenarbeit zwischen der Gleitschiene (40), dem Rad (50, 54) und dem festen Element (58) eine Verlagerung der Klammer (20) in der Richtung der Ladungsvorrichtung (1) mit einer größeren Amplitude gewährleistet.

10. Vorrichtung nach Anspruch 9, **dadurch gekennzeichnet, dass** die Befreiung der Klammer (20) von der Kassette (60) durch einen Zapfen (24) geleitet wird, welcher eine an einem Element (5) der Ladungsvorrichtung (1) vorgesehene Rille (6) durchläuft.

11. Vorrichtung nach Anspruch 10, **dadurch gekennzeichnet, dass** die Rille (6) an einem ihrer Enden ein horizontales Profil (6A) aufweist, welches eine Verlagerung der Klammer (20) bezüglich des Fachs (10) ermöglicht, um jede in dem Fach (10) platzierte Kassette (60) zu zentrieren.

12. Vorrichtung nach Anspruch 10, **dadurch gekennzeichnet, dass** die Rille (6) an jedem ihrer Enden ein horizontales Profil (6A) aufweist, um die Klammer (20) in Betriebsstellung und Ruhestellung zu verriegeln.

13. Vorrichtung nach einem der Ansprüche 6 oder 7, **dadurch gekennzeichnet, dass** die Klammer (20) mit einer Achse (125) verbunden ist, welche von der Ladungsvorrichtung (1) gehalten ist und durch die Mittel (132) in Drehung versetzt wird.

14. Vorrichtung nach Anspruch 13, **dadurch gekennzeichnet, dass** allein diese Drehung der Klammer (20), im Wesentlichen um 180°, diese in einer Stellung der Nicht-Interferenz mit jedem anderen Element des Gerätes zur Aufnahme und/oder Wiedergabe, welches auf die Kassette (60) einwirken kann, platziert.

15. Vorrichtung nach einem der vorangehenden Ansprüche, **dadurch gekennzeichnet, dass** die Klammer (20) der Einwirkung elastischer Mittel (48) ausgesetzt ist, welche diese in ihrer Betriebsstellung bzw. Ruhestellung halten.

16. Vorrichtung nach einem der vorangehenden Ansprüche, **dadurch gekennzeichnet, dass** die Rille (111), welche die Bewegung des Fachs (10) bezüglich der Ladungsvorrichtung (1) führt, mit einem horizontalen Profil (111A) versehen ist, das dem Fach (10) ermöglicht, bei Betätigung der Ladungsvorrichtung (1) zum Zentrieren jeder von dem Anwender platzierten Kassette eine Relativbewegung bezüglich der Klammer (20) auszuführen.

17. Vorrichtung nach einem der vorangehenden Ansprüche, **dadurch gekennzeichnet, dass** für Kassetten (60) desselben Standards die Stellung der Klammer (20) bezüglich des Bodens des Fachs (10) der Vertiefung (64) der kleinsten Kassette entspricht.

## Claims

1. Checking device for cassette (60), cartridge, housing, associated to a loading device (1) of said cassette (60) in a playback and/or recording unit comprising a frame (100) and including a housing (10) receiving the cassette (60) to transfer it between an insertion position and a playback and/or recording position as well as a tab cooperating with a cavity (64) provided in the bottom face of the housing of cassettes (60) of a same standard-and of different sizes,
**characterized in that** this tab (20) is of a shape matching the pattern of the cavity (64) and is mobile with respect to the cassette between a operative position of the tab when the housing (10) is in position of insertion of the cassette to check the correct presentation and ensure the centering of any cassette (60) which is set therein, and an inoperative position of the tab where it is cleared off of the cassette (60), the housing (10) and any element (30, 72, 76) cooperating with the cassette (60) in its playback and/or recording position.

2. Device according to claim 1, **characterized in that** the tab (20) includes lateral profiles (21), the spacing of which matches the width of the cavity (64).

3. Device according to any of the preceding claims, **characterized in that** the thickness of the tab (20) at its base matches the footprint of the cavity (64).

4. Device according to any of the preceding claims, **characterized in that** the upper profiles of the tab (20) are curved to facilitate its disengagement from the cavity (64).

5. Device according to any of the preceding claims, **characterized in that** the movement of the tab (20) between its operative and inoperative positions is powered by the movement of the loading device (1).

6. Device according to claim 5, **characterized in that** the movement of the tab (20) is powered by means (40, 132) mounted on the loading device (1) and mobile with respect to it.

7. Device according to claim 6, **characterized in that** the movement of the means (40, 132) with respect to the loading device (1) is powered by a fixed element (58) mounted on the frame (100) of the unit.

8. Device according to claim 6 or 7, **characterized in that** the means (40) include a slider cooperating with a wheel (50, 54) set on the loading device (1).

9. Device according to claim 8, **characterized in that** the cooperation between the slider (40), the wheel (50, 54) and the fixed element (58) ensures a movement of the tab (20) in the direction of that of the loading device (1) with a larger amplitude.

10. Device according to claim 9, **characterized in that** the disengagement of the tab (20) from the cassette (60) is guided by a stud (24) sliding in a groove (6) provided in an element (5) of the loading device (1).

11. Device according to claim 10, **characterized in that** the groove (6) bears at one of its ends a horizontal leg (6A) enabling a movement of the tab (20) with respect to the housing (10) to center any cassette (60) set inside the housing (10).

12. Device according to claim 10, **characterized in that** the groove (6) bears at each of its ends a horizontal leg (6A) to lock the tab (20) in operative, inoperative position.

13. Device according to any of claims 6 or 7, **characterized in that** the tab (20) is linked to a shaft (125) supported by the loading device (1) and powered for rotation by said means (132).

14. Device according to claim 13, **characterized in that** this very rotation of the tab (20), in essence of 180°, sets it in a non-interference position with all element of the playback and/or recording unit which may act on the cassette (60).

15. Device according to any of the preceding claims, **characterized in that** the tab (20) undergoes the action of resilient means (48) biasing it in its operative, respectively inoperative positions.

16. Device according to any of the preceding claims, **characterized in that** the groove (111) guiding the movement of the housing (10) with respect to the loading device (1) is provided with a horizontal leg (111A) enabling the housing (10) to perform a relative movement with respect to the tab (20) upon actuation of the loading device (1) to center any cassette set by the user.

17. Device according to any of the preceding claims, **characterized in that** for cassettes (60) of a same standard, the position of the tab (20) with respect to the bottom of the housing (10), matches the cavity (64) of the smallest cassette.
